# EUROPÄISCHE PATENTANMELDUNG

(11) **EP 3 546 199 A1**
(43) Veröffentlichungstag der Anmeldung: **02.10.2019**
(21) Anmeldenummer: 18164546.6
(22) Anmeldetag: 28.03.2018
(51) Int. Cl.: B29C 65/36, B29C 65/46, B29C 35/08, B29C 33/06, B21D 51/44, B65D 17/50, B29L 31/56, B29K 705/02, B29C 33/40, B29K 705/00

(54) **VERFAHREN ZUM HERSTELLEN EINES DOSENDECKELS AUS EINEM VERBUNDMATERIAL**

(71) Anmelder: Top Cap Holding GmbH, 6330 Kufstein (AT)
(72) Erfinder: PIECH, Gregor Anton, 5020 Salzburg (AT)
(74) Vertreter: Manitz Finsterwald Patent- und Rechtsanwaltspartnerschaft mbB

(57) **Zusammenfassung**

Verfahren zum Herstellen eines Dosendeckels aus einem Verbundmaterial umfassend mindestens ein Metallblechteil, insbesondere Aluminium- oder Weißblechteil, und mindestens ein Kunststoffteil, insbesondere aus Polypropylen oder Polyethylenterephthalat, wobei zur Bewirkung einer stabilen Verbindung mit möglichst geringem Aufwand und geringer Herstellungszeit das Kunststoffteil und das Metallblechteil durch Aneinanderpressen und induktives Erwärmen zusammengefügt werden.

## Beschreibung

Die vorliegende Erfindung betrifft ein Verfahren zum Herstellen eines Dosendeckels aus einem Verbundmaterial umfassend mindestens ein Metallblechteil, insbesondere Aluminium- oder Weißblechteil, und mindestens ein Kunststoffteil, insbesondere aus Polypropylen oder Polyethylenterephthalat.

Dosendeckel für Getränkedosen weisen üblicherweise einen durch eine Schwächungslinie vom übrigen Dosendeckel getrennten Öffnungsabschnitt auf, der über ein daran befestigtes Aufreißorgan aus der Deckelebene herausbewegt werden kann, um die Dose zu öffnen. Der Öffnungsabschnitt kann dabei in die Dose hinein oder nach oben bewegt werden. Es sind auch wiederverschließbare Dosendeckel bekannt, bei welchen ein mit der festen Deckelfläche verbundener und den Öffnungsbereich umgebender Dichtungsrahmen aus Kunststoffmaterial mit dem den Öffnungsbereich umgebenden metallischen Deckelbereich verbunden ist. Mit dem Dichtungsrahmen wirkt eine Verschließeinheit zusammen, die mit dem aufschwenkbaren, metallischen Öffnungsabschnitt des Dosendeckels verbunden ist. Der Dichtungsrahmen und die Verschließeinheit bestehen bevorzugt aus Kunststoff, der Dosendeckel aus Aluminium oder Weißblech. Ähnliche Dosendeckel werden für Lebensmitteldosen eingesetzt. Es ist auch bekannt geworden, dass anstelle der Schwächungslinie ein Mikrospalt zwischen dem Öffnungsabschnitt und dem festen Deckelbereich vorgesehen ist. In diesem Fall ist der Dosendeckel innen mit einer Kunststofffolie laminiert, um den Mikrospalt dichtend zu überdecken. Die Kunststofffolie wird beim Öffnen des Dosendeckels mit aufgerissen, wofür die Kunststofffolie ebenfalls mit einer Schwächungslinie versehen sein kann.

Der Erfindung liegt die Aufgabe zugrunde, ein Verfahren zum Herstellen eines solchen Dosendeckels anzugeben, welches möglichst einfach und kostengünstig ist.

Diese Aufgabe wird dadurch gelöst, dass das Kunststoffteil und das Metallblechteil durch Aneinanderpressen und induktives Erwärmen zusammengefügt werden.

Durch das induktive Erwärmen wird das Kunststoffteil angeschmolzen und dadurch mit dem Metallblechteil stoffschlüssig verbunden. Die Induktionsheizung hat dabei den Vorteil, dass nur das Metallblechteil direkt erwärmt wird, da durch die Induktion nur in dem Metallblechteil Wirbelströme erzeugt werden können. Das Kunststoffteil wird dagegen indirekt durch das Metallteil erwärmt, wodurch insbesondere das dem Metallblechteil berührende Seite des Kunststoffteils angeschmolzen wird.

Bevorzugt wird das Metallblechteil und/oder das Kunststoffteil vor dem Fügen mit einem Haftvermittler beschichtet. Die Stabilität der Fügeverbindung kann dadurch erhöht werden.

Der Haftvermittler enthält bevorzugt denselben Kunststoff wie das mit dem Metallblechteil zu verbindende Kunststoffteil. Hierdurch ergibt sich eine besonders gute Haftung und damit eine besonders feste Fügeverbindung.

Besonders bevorzugt wird ein fertig ausgeformtes Dosendeckelelement aus Metallblech mit einer eine angepasste Form aufweisenden Kunststofffolie, insbesondere einer thermogeformten Kunststofffolie, zusammengefügt. Auch hierdurch wird eine besonders feste Fügeverbindung erreicht. Zudem kann die Fügeverbindung mit relativ wenig Energieaufwand hergestellt werden, da eine anpassende Verformung des Kunststoffteils beim Fügen nicht erforderlich ist.

Zur Herstellung eines wiederverschließbaren Dosendeckels wird nach einer weiteren Ausgestaltung der Erfindung das Dosendeckelelement auf seiner einen Seite mit einer Kunststofffolie und auf seiner anderen Seite mit einem den Öffnungsbereich des Dosendeckels abdeckenden Verschlusselement bestehend aus einem Dichtungsrahmen und einer aufschwenkbaren Verschließeinheit zusammengefügt, wobei das Verschlusselement aus insbesondere spritzgegossenem Kunststoff, insbesondere Polypropylen oder Polyethylenterephthalat besteht. Dabei erfolgen beide Fügevorgänge bevorzugt in einem Arbeitsschritt. Das Fügeverfahren kann dadurch besonders schnell und einfach durchgeführt werden. Zudem wird Energie eingespart, da das Metallblechteil des Dosendeckels nur einmal erwärmt werden muss.

Nach einer bevorzugten Ausgestaltung der Erfindung wird für den Fügevorgang eine Presse verwendet, mit einem Oberwerkzeug und einem Unterwerkzeug sowie einem Hohlleiter zur Zuführung des elektromagnetischen Wechselfeldes in den Bereich des Dosendeckels zu dessen induktiver Erwärmung, wobei das Oberwerkzeug eine zu einer Seite des Dosendeckels und das Unterwerkzeug eine zur anderen Seite des Dosendeckels reziproke Form aufweist. Mit einer solchen Vorrichtung kann eine besonders gute Fügeverbindung hergestellt werden. Über die Presse werden die zu fügenden Teile zusammengepresst, so dass sie in einem innigen Kontakt stehen. Über den Hohlleiter wird das elektromagnetische Wechselfeld in den Bereich des Dosendeckels geleitet und erwärmt das Metallblechteil, dessen Wärme wiederum zum Anschmelzen des das Metallblechteil berührenden Kunststoffs führt.

Besonders bevorzugt weist der Hohlleiter mehrere ring- bzw. spiralförmige Abschnitte auf, die dem Fügebereich des Dosendeckels gegenüberliegen, insbesondere einen ringförmigen Bereich im Randbereich des Dosendeckels sowie einen spiralförmigen Bereich mit zwei, drei oder mehr Windungen im mittleren Deckelbereich. Durch diese Ausgestaltung kann eine vorteilhafte Erwärmung des Metallblechteils erzielt werden, insbesondere im kritischen Randbereich durch den eigenen ringförmigen Bereich des Hohlleiters dort.

Nach einer weiteren vorteilhaften Ausgestaltung der Erfindung besteht das auf Seiten des Hohlleiters befindliche Werkzeug aus weitgehend formstabilem Material, insbesondere Kunststoff, und das gegenüberliegende Werkzeug aus elastischem Material, insbesondere Elastomermaterial. Durch das formstabile Material auf Seiten des Hohlleiters wird dieser vor auftretenden Kräften sicher geschützt. Das elastische Material auf der gegenüberliegenden Seite ermöglicht andererseits einen Ausgleich von Fertigungstoleranzen, so dass durch diese beim Zusammenpressen der Teile keine zu hohen Kräfte entstehen.

Das weitgehend formstabile Werkzeug ist bevorzugt der Kunststofffolie zugeordnet. Es kann zudem bevorzugt mit Rippen zum Einbringen einer Schwächungslinie in die Kunststofffolie während des Fügevorgangs versehen sein. Hierdurch kann ein Arbeitsgang bei der Herstellung eines Dosendeckels eingespart werden.

Nach einer ebenfalls bevorzugten Ausgestaltung der Erfindung werden die zu fügenden Teile beim Fügevorgang durch Unterdruck zusammengehalten. Dadurch kann ein passgenaues Fügen gewährleistet werden. Zudem ergibt sich eine vorteilhafte Entlüftung, die den Einschluss von Luftblasen zwischen dem Kunststoffmaterial und dem Metallblechteil verhindert. Bei Dosendeckeln mit Mikrospalt zwischen dem Öffnungsabschnitt und dem festen Deckelbereich kann die Entlüftung auf beiden Seiten des Deckels wirken.

Insbesondere zur Herstellung von Dosendeckeln ohne Mikrospalt ist es vorteilhaft, mindestens eines der Werkzeuge mit Ausbuchtungen zur Erzeugung von Freiräumen zu versehen, die zur Aufnahme eventuell eingeschlossener Luft ausgebildet sind. Solche Ausbuchtungen können bevorzugt in solchen Bereichen vorgesehen werden, in denen eingeschlossene Luftblasen nicht stören, beispielsweise im mittleren Deckelbereich mit ausreichendem Abstand zum Deckelrand und zum Öffnungsbereich.

Nach einer weiteren Ausgestaltung der Erfindung wird ein Rundschalttisch verwendet, um die einzelnen Bestandteile des Dosendeckels für den Fügevorgang zusammenzubringen. Damit kann eine vorteilhafte Bestückung einer beim Fügen verwendeten Presse erzielt werden.

Nach einer bevorzugten Weiterbildung weist der Rundschalttisch eine Unterdruckversorgung für mindestens eine Beschickungsstation auf, wobei die Unterdruckversorgung der einzelnen Stationen über Ventile erfolgt, die durch einen Rundverteiler betätigt werden. Dies ist besonders vorteilhaft hinsichtlich der Verteilung des Unterdrucks.

Ein Ausführungsbeispiel der Erfindung ist in der Zeichnung dargestellt und wird nachfolgend beschrieben. Es zeigen, jeweils in schematischer Darstellung,
- Fig. 1: eine geschnittene, perspektivische Ansicht einer Presse zur Verwendung in einem erfindungsgemäßen Verfahren,
- Fig. 2: eine geschnittene Seitenansicht eines Teils der erfindungsgemäßen Presse,
- Fig. 3: eine perspektivische Ansicht eines in der Vorrichtung von Fig. 1 zu verwendenden Induktors,
- Fig. 4: eine Seitenansicht des Induktors von Fig. 3,
- Fig. 5: eine Draufsicht auf den Induktor von Fig. 3,
- Fig. 6: eine Draufsicht auf einen Dosendeckel,
- Fig. 7: einen Querschnitt durch den Dosendeckel von Fig. 6,
- Fig. 8: das Detail B von Fig. 7,
- Fig. 9: das Detail C von Fig. 7, und
- Fig. 10: das Detail von D von Fig. 7.

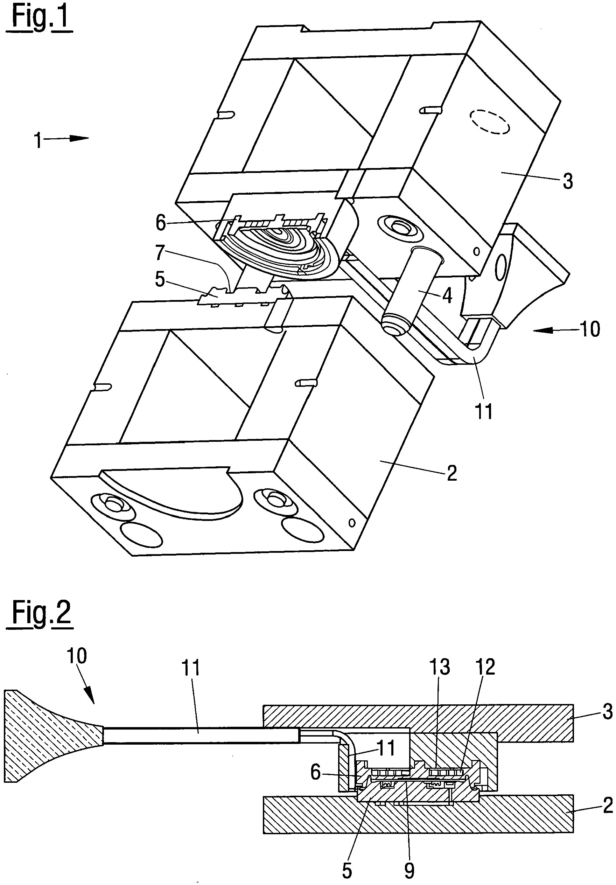

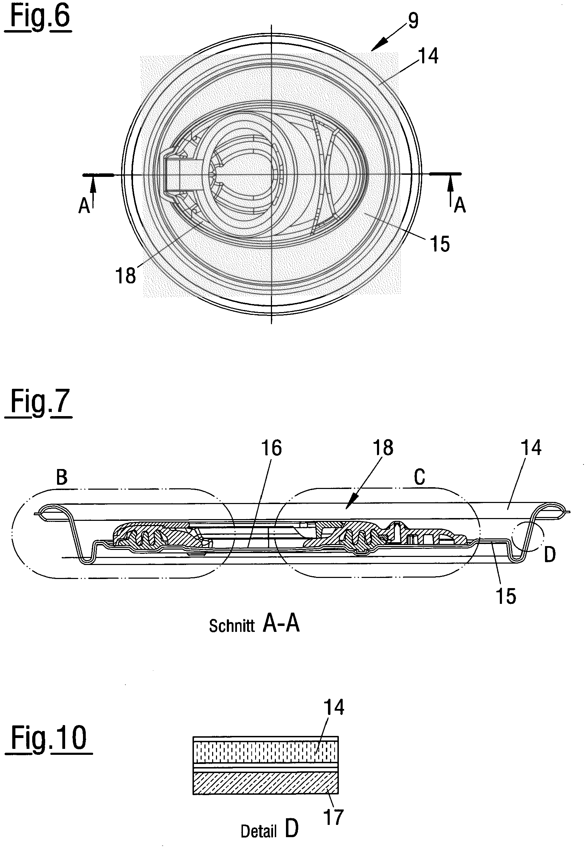

Die in Fig. 1 dargestellte Presse 1 umfasst ein Untergestell 2 und ein demgegenüber bewegliches oberes Pressenteil 3 sowie Führungszylinder 4 zur Führung des oberen Pressenteils 3 beim Öffnen und Schließen der Presse. Auf der Oberseite des Untergestells 2 ist ein Unterwerkzeug 5 und auf der Unterseite des oberen Pressenteils 3 ein Oberwerkzeug 6 vorgesehen. Das Unterwerkzeug 5 besteht aus einem Elastomermaterial und weist eine Kavität 7 zur Aufnahme eines Verschlusselements 18 (siehe Fig. 6) eines Dosendeckels 9 auf. Im Übrigen ist das Unterwerkzeug 5 der Form der Oberseite des Dosendeckels 9 nachgebildet. Das Oberwerkzeug 6 besteht aus einem weitgehend formstabilen Kunststoff und ist der Unterseite des Dosendeckels 9 nachgebildet.

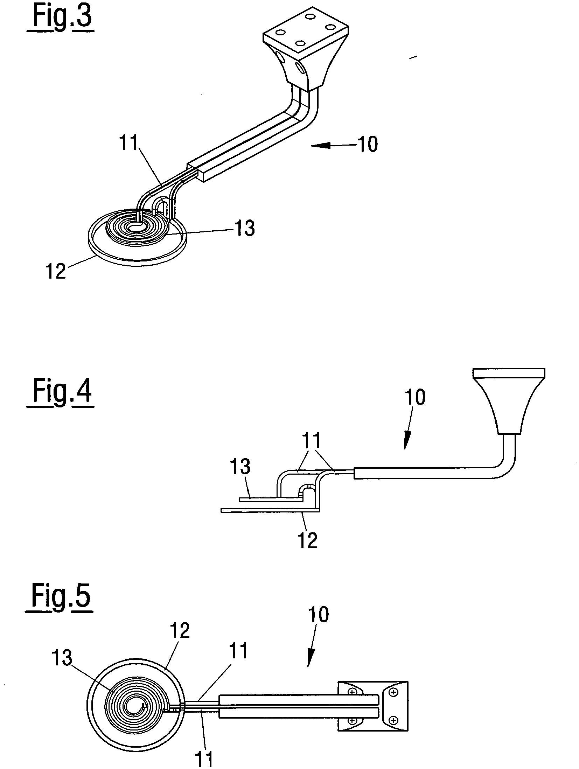

Ein Induktor 10 ist im Bereich der Presse angeordnet. Hohlleiter 11 zur Zuführung eines elektromagnetischen Wechselfeldes sind ausgehend vom Induktor 10 in den Bereich des Oberwerkzeugs 6 geführt. Wie man insbesondere in den Fig. 3 bis 5 sieht, sind die insbesondere aus Kupfer bestehenden Hohlleiter zu einem äußeren Ring 12 und einer innerhalb des Rings angeordneten Spirale 13 mit mehreren Windungen geformt. Wie man insbesondere in Fig. 2 sehen kann, sind der äußere Ring 12 und die Spirale 13 oberhalb des Oberwerkzeugs 6 angeordnet. Sie liegen dadurch der zu fügenden Fläche des Dosendeckels 9 gegenüber. Die Kupferhohlleiter 11 sind insbesondere wassergekühlt.

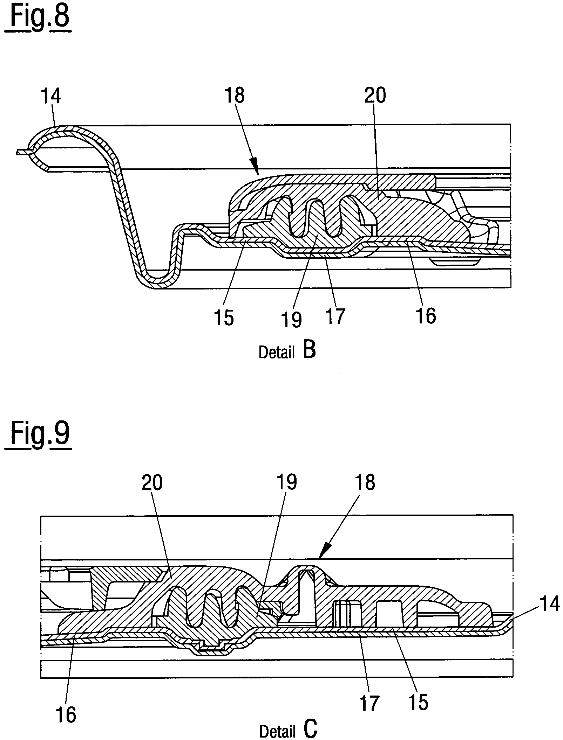

Der in den Fig. 6 bis 9 dargestellte Dosendeckel 9 umfasst einen Grundkörper 14 aus einem Metallblech, insbesondere Aluminium oder Weißblech. Der Grundkörper 14 umfasst einen festen metallischen Deckelbereich 15 sowie einen hochschwenkbaren Öffnungsabschnitt 16 zur Freigabe eines Öffnungsbereichs 8. Wie man insbesondere in den Fig. 8 und 9 sieht, ist die Unterseite des Dosendeckels 9 mit einer Kunststofffolie 17 laminiert. Auf der Oberseite des Dosendeckels 9 ist dagegen ein Verschlusselement 18 angeordnet, welches aus einem Dichtrahmen 19 und einer Verschließeinheit 20 besteht. Der Dichtrahmen 19 ist mit dem festen Deckelbereich 15 verbunden, und die Verschließeinheit 20 mit dem hochschwenkbaren Öffnungsabschnitt 16.

Zur Herstellung des in den Fig. 6 bis 9 dargestellten Dosendeckels 9 kann das erfindungsgemäße Verfahren unter Verwendung der in den Fig. 1 bis 5 dargestellten Vorrichtung eingesetzt werden. Hierfür wird das insbesondere einstückig in einem Tiefziehverfahren hergestellte Verschlusselement 18 in das Unterwerkzeug 5 derart eingelegt, dass die dem Dosendeckel 9 zugewandte Seite nach oben zeigt. Auf das Verschlusselement 18 wird der Grundkörper 14 gelegt, der zuvor auf seiner Unterseite mit der Kunststofffolie 17 bestückt wurde. Sodann wird die Presse 1 geschlossen und die Induktionsheizung 10 eingeschaltet.

Durch die zugeführte Energie wird der metallische Grundkörper 14 erwärmt, indem in diesem elektromagnetische Wirbelströme erzeugt werden. Der erwärmte Grundkörper 14 erwärmt seinerseits die Kunststofffolie 17 und das Verschlusselement 18, die dadurch angeschmolzen werden. Dadurch ergibt sich eine Kunststoffschweißverbindung zwischen dem metallischen Grundkörper 14 und der Kunststofffolie 17 einerseits und dem Verschlusselement 18 andererseits, wobei zur Verbesserung der Kunststoffschweißverbindung bevorzugt ein Haftvermittler verwendet wird. Der Haftvermittler kann dabei denselben Kunststoff enthalten, der für die Kunststofffolie 17 bzw. das Verschlusselement 18 verwendet wird. Hierbei kann es sich insbesondere um Polypropylen oder um Polyethylenterephthalat handeln.

Das Oberwerkzeug 6 kann zudem hier nicht erkennbare Rippen aufweisen, durch welche beim Press- und Fügevorgang eine Schwächungslinie in die Kunststofffolie 17 eingebracht wird. Zudem können in dem Oberwerkzeug 6 Ausbuchtungen zur Erzeugung von Freiräumen zwischen Kunststofffolie 17 und metallischem Grundkörper 14 vorgesehen sein. Hierdurch kann eingeschlossene Luft in vorbestimmten Bereichen des Dosendeckels 9 gesammelt werden, insbesondere in Bereichen, in denen Luftblasen nicht stören, wie beispielsweise im Bereich zwischen dem Rand des Dosendeckels und dessen Öffnungsbereich 8. Zusätzlich oder alternativ kann die Presse 1 mit einer Unterdruckversorgung versehen sein, die einerseits die zu fügenden Teile zusammenhält und andererseits ein Einschließen von Luft zumindest weitgehend verhindern kann. Bei Dosendeckeln mit einem Mikrospalt zwischen dem festen Deckelbereich 15 und dem aufschwenkbaren Öffnungsabschnitt 16 gilt dies für beide Seiten des Dosendeckels.

Zur Bestückung der Presse 1 kann ein Rundschalttisch vorgesehen sein, der mehrere Stationen zum Zusammenstellen der Einzelteile des Dosendeckels aufweist. Anstelle eines Rundschalttisches kann aber auch eine Linearzuführung für die Presse 1 vorgesehen sein.

Nach erfolgter Verschweißung der Kunststofffolie 17 und des Verschlusselements 18 mit dem metallischen Grundkörper 14 wird die Presse geöffnet und der fertige Dosendeckel 9 entnommen.

### Bezugszeichenliste

- 1: Presse
- 2: Untergestell
- 3: oberes Pressenteil
- 4: Führungszylinder
- 5: Unterwerkzeug
- 6: Oberwerkzeug
- 7: Kavität
- 8: Öffnungsbereich
- 9: Dosendeckel
- 10: Induktor
- 11: Hohlleiter
- 12: äußerer Ring
- 13: Spirale
- 14: Grundkörper
- 15: fester Deckelbereich
- 16: Öffnungsabschnitt
- 17: Kunststofffolie
- 18: Verschlusselement
- 19: Dichtrahmen
- 20: Verschließeinheit

## Patentansprüche

1. Verfahren zum Herstellen eines Dosendeckels (9) aus einem Verbundmaterial umfassend mindestens ein Metallblechteil (14), insbesondere Aluminium- oder Weißblechteil, und mindestens ein Kunststoffteil (17, 18), insbesondere aus Polypropylen oder Polyethylenterephthalat,
**dadurch gekennzeichnet, dass**
das Kunststoffteil (17, 18) und das Metallblechteil (14) durch Aneinanderpressen und induktives Erwärmen zusammengefügt werden.

2. Verfahren nach Anspruch 1,
**dadurch gekennzeichnet, dass**
das Metallblechteil (14) und/oder das Kunststoffteil (17, 18) vor dem Fügen mit einem Haftvermittler beschichtet werden.

3. Verfahren nach Anspruch 2,
**dadurch gekennzeichnet, dass**
der Haftvermittler denselben Kunststoff enthält wie das mit dem Metallblechteil (14) zu verbindende Kunststoffteil (17, 18).

4. Verfahren nach einem der vorhergehenden Ansprüche,
**dadurch gekennzeichnet, dass**
ein fertig ausgeformtes Dosendeckelteil (14) aus Metallblech mit einer eine angepasste Form aufweisenden Kunststofffolie (17), insbesondere thermogeformte Kunststofffolie, zusammengefügt wird.

5. Verfahren nach Anspruch 4,
**dadurch gekennzeichnet, dass**
das Dosendeckelteil (14) auf seiner einen Seite mit der Kunststofffolie (17) und auf seiner anderen Seite mit einem einen Öffnungsbereich (8) des Dosendeckels (9) überdeckenden Verschlusselement (18) aus insbesondere spritzgegossenem Kunststoff, insbesondere Polypropylen oder Polyethylenterephthalat, zusammengefügt wird.

6. Verfahren nach Anspruch 5,
**dadurch gekennzeichnet, dass**
beide Fügevorgänge in einem Arbeitsschritt erfolgen.

7. Verfahren nach einem der vorhergehenden Ansprüche,
**dadurch gekennzeichnet, dass**
für den Fügevorgang eine Presse (1) verwendet wird, mit einem Oberwerkzeug (6) und einem Unterwerkzeug (5) sowie einem Hohlleiter (11) zur Zuführung eines elektromagnetischen Wechselfeldes in den Bereich des Dosendeckels (9) zu dessen induktiver Erwärmung, wobei das Oberwerkzeug (6) eine zu einer Seite des Dosendeckels (9) und das Unterwerkzeug eine zur anderen Seite des Dosendeckels (9) reziproke Form aufweist.

8. Verfahren nach Anspruch 7,
**dadurch gekennzeichnet, dass**
der Hohlleiter (11) einen Abschnitt umfasst, der dem Aufnahmebereich des zu fügenden Dosendeckels (9) gegenüberliegt, insbesondere einen ringförmigen Bereich (12) im Randbereich des Dosendeckels (9) sowie einen innerhalb des ringförmigen Bereichs (12) gelegenen spiralförmigen Bereich (13) mit zwei, drei oder mehr Windungen im mittleren Bereich des Dosendeckels (9).

9. Verfahren nach Anspruch 8,
**dadurch gekennzeichnet, dass**
das auf Seiten des Hohlleiters (11) befindliche Werkzeug (6) aus weitgehend formstabilem Material, insbesondere Kunststoff, besteht, und das gegenüberliegende Werkzeug (5) aus elastischem Material, insbesondere Elastomermaterial.

10. Verfahren nach Anspruch 9,
**dadurch gekennzeichnet, dass**
das weitgehend formstabile Werkzeug (6) der Kunststofffolie (17) zugeordnet ist.

11. Verfahren nach Anspruch 10,
**dadurch gekennzeichnet, dass**
das der Kunststofffolie (17) zugeordnete Werkzeug (6) Rippen zum Einbringen einer Schwächungslinie in die Kunststofffolie (17) während des Fügevorgangs aufweist.

12. Verfahren nach einem der vorhergehenden Ansprüche,
**dadurch gekennzeichnet, dass**
mindestens eines der Werkzeuge (5, 6) Ausbuchtungen zur Erzeugung von Freiräumen zur Aufnahme eventuell eingeschlossener Luft aufweist.

13. Verfahren nach einem der vorhergehenden Ansprüche,
**dadurch gekennzeichnet, dass**
die zu fügenden Teile (14, 17, 18) beim Fügevorgang durch Unterdruck zusammengehalten werden.

14. Verfahren nach einem der vorhergehenden Ansprüche,
**dadurch gekennzeichnet, dass**
ein Rundschalttisch verwendet wird, um die einzelnen Bestandteile (14, 17, 18) des Dosendeckels (9) für den Fügevorgang zusammenzubringen.

15. Verfahren nach Anspruch 14,
**dadurch gekennzeichnet, dass**
der Rundschalttisch eine Unterdruckversorgung für mindestens eine Beschickungsstation aufweist, wobei die Unterdruckversorgung der einzelnen Stationen über Ventile ein- und ausschaltbar ist, die durch einen Rundverteiler mit Unterdruck versorgt werden.
